# EUROPÄISCHE PATENTSCHRIFT

(11) **EP 0 461 486 B1**
(45) Veröffentlichungstag und Bekanntmachung des Hinweises auf die Patenterteilung: **02.03.1994**
(21) Anmeldenummer: 91108911.8
(22) Anmeldetag: 31.05.1991
(51) Int. Cl.: A01C 17/00, A01C 19/00

(54) **Verteilmaschine**
Spreader
Epandeur

(30) Priorität: 12.06.1990 DE 4018752
(43) Veröffentlichungstag der Anmeldung: 18.12.1991
(73) Patentinhaber: Amazonen-Werke H. Dreyer GmbH & Co. KG, D-49205 Hasbergen (DE)
(72) Erfinder: Higgen, Reinhard, W-2872 Hude 1 (DE); Reinke, Wilfried, W-2900 Oldenburg (DE); Wiede, Wolfgang, O-2600 Güstrow (DE)

(56) Entgegenhaltungen:
- EP-A- 0 199 299
- DE-A- 2 025 321
- US-A- 3 516 576

## Beschreibung

Die Erfindung betritt eine Verteilmaschine gemäß Oberbegriff des Patentanspruches 1.

Derartig ausgebildete Verteilmaschinen sind in der landwirtschaftlichen Praxis bekannt. Hierbei läßt sich das angetriebene, als Förderband ausgebildete Förder- und/oder Dosierorgan wahlweise zapfwellenabhängig über den Zapfwellenantrieb des Zugfahrzeuges oder wegabhängig über den Bodenradantrieb antreiben. Wird das Förderband über den Zapfwellenantrieb angetrieben, erfolgt der Antrieb mittels Kettentrieb. Zum Antrieb des Förderorgans mit unterschiedlichen Fördergeschwindigkeiten sind die Kettenräder dieses Kettentriebes auszutauschen. Soll nun der Antrieb des Förderbandes von dem Zapfwellenantrieb auf Bodenradantrieb umgestellt werden, ist ein Kupplungsstecker des unterhalb des Vorratsbehälters angeordneten Kettentriebes herauszuziehen und der als Reibradantrieb ausgebildete Bodenantrieb ist in Arbeitsstellung zu verschwenken. Jetzt wird das Förderband wegabhängig angetrieben, während das angetriebene Verteilorgan weiterhin von der Zapfwelle des Zugfahrzeuges angetrieben wird.

Der Erfindung liegt nun die Aufgabe zugrunde, den Antrieb für das Förder- und/oder Dosierorgan der gattungsgemäßen Verteilmaschine wesentlich zu verbessern.

Diese Aufgabe wird in erfindungsgemäßer Weise durch die kennzeichnenden Merkmale des Anspruches 1 gelöst. Infolge dieser Maßnahme lassen sich auf einfachste Weise unterschiedliche Fördergeschwindigkeiten für das Förder- und/oder Dosierorgan einstellen, ohne daß Kettenräder ausgewechselt werden müssen. Zu dem entfällt der freiliegende Kettentrieb, der bedingt durch die auszubringenden Düngemittel sehr wartungsbedürftig ist. Weiterhin lassen sich nun die mit den die Verteilorgane antreibenden Zapfwellenstang oder mit dem Bodenantrieb zu verbindende Gelenkwelle mit den unterschiedlichen Eingangswellen des Antriebsgetriebes verbinden. Außerdem läßt sich das Antriebsgetriebe in die jeweils günstigste Position verschwenken und am Rahmen befestigen, so daß die zulässigen Gelenkwellenabwicklungen beim Aufstecken der Gelenkwelle auf die unterschiedlichen Eingangswellen des Antriebsgetriebes nicht überschritten werden.

Die deutsche Offenlegungsschrift 20 25 321 zeigt eine Verteilmaschine mit einem Vorratsbehälter der trichterförmig ausgebildet ist. In der Trichterspitze befindet sich eine Auslauföffnung, unter welcher eine nach hinten verlängerte Förderschnecke angeordnet ist, die das Material aus dem Vorratsbehälter abzieht und einer Schleuderscheibe zuführt. Die Förderschnecke wird über einen Freilaufantrieb intermetierend bewegt. Der Hub des Freilaufantriebes ist einstellbar, so daß hierdurch die Fördermenge reguliert werden kann. Sowohl die Schleuderscheibe wie auch die Förderschnecke werden von der Zapfwelle des die Verteilmaschine ziehenden Schleppers angetrieben.

In einer besonders bevorzugten Ausführungsform ist in erfindungsgemäßer Weise vorgesehen, daß das Antriebsgetriebe mehrere Eingangswellen aufweist, daß die Eingangswellen als Gelenkwellenanschlüsse ausgebildet sind. Hierdurch läßt sich das Förderband auf einfachste Weise mit unterschiedlichen Fördergeschwindigkeiten antreiben, wobei das Antriebsgetriebe für das Förder- und/oder Dosierorgan mittels einer Gelenkwelle wahlweise mit dem Bodenantrieb oder mit dem als Zapfwellenantrieb ausgebildeten, die Verteilorgane antreibenden Zapfwellenstrang verbindbar ist. Hierdurch ergibt sich eine besonders einfache Möglichkeit zum Antrieb des Förder- und/oder Dosierorgans der Verteilmaschine mit unterschiedlichen Fördergeschwindigkeiten durch die Wahl des entsprechenden Übersetzungsverhältnisses durch Aufstecken der Gelenkwelle auf die unterschiedlichen Eingangswellen des Antriebsgetriebes.

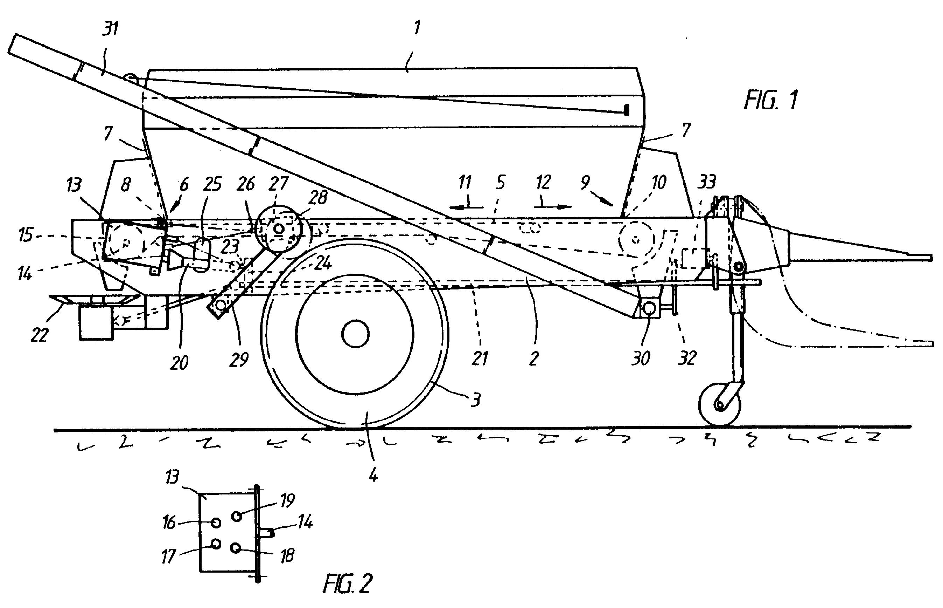

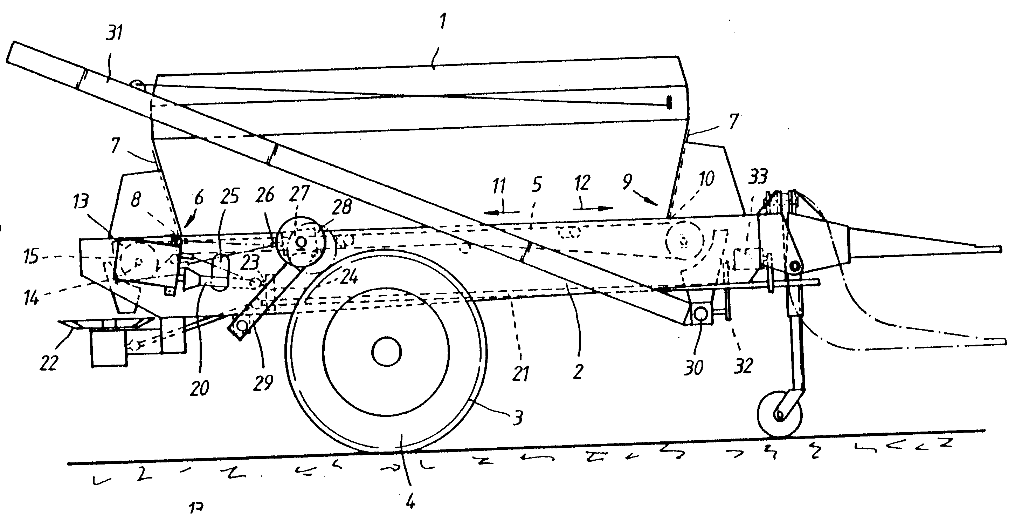

Weitere Einzelheiten der Erfindung sind den übrigen Unteransprüchen, der Beispielsbeschreibung sowie den Zeichnungen zu entnehmen. Hierbei zeigt
- Fig. 1: die in erfindungsgemäßer Weise als Großflächenstreuer ausgebildete Verteilmaschine in der Seitenansicht und in Prinzipdarstellung und
- Fig. 2: das erfindungsgemäße Antriebsgetriebe in der Vorderansicht.

Die als Großflächenstreuer ausgebildete Verteilmaschine ist mit dem Vorratsbehälter 1, dem Fahrzeugrahmen 2 und dem Fahrwerk 3 mit seinen Laufrädern 4 ausgestattet. In dem unteren Bereich des Vorratsbehälters 1 befindet sich das antreibbare und als Förderband 5 ausgebildete Förderorgan. Im hinteren Bereich 6 des Vorratsbehälters 1 ist die über den hinteren Schieber 7 einstellbare Austrittsöffnung 8 angeordnet, während sich die im vorderen Bereich 9 des Vorratsbehälters 1 befindliche Austrittsöffnung 10 über den vorderen Schieber 7 in ihrer Öffnungsweite einstellen läßt.

Das Förderband 5 ist mit unterschiedlichen Fördergeschwindigkeiten in zwei Richtungen antreibbar, wobei die entgegengesetzten Förderrichtungen 11 und 12 entstehen. Der Antrieb des Förderbandes 5 erfolgt über das verschwenkbare Antriebsgetriebe 13. Die Ausgangswelle 14 des Antriebsgetriebes 13 treibt über die Gelenkrolle 15 das Förderband 5 an. Hierbei erfolgt der Antrieb der Eingangswellen 16, 17, 18 oder 19 über die Gelenkwelle 20 entweder zapfwellen- oder wegabhängig. Wird das Förderorgan 5 zapfwellenabhängig angetrieben, ist die Gelenkwelle 20 mit dem Zapfwellenstrang 21 verbunden, mit dem das im Bereich unterhalb der hinteren Austrittsöffnung 8 sich befindliche, als Scheibenstreuwerk 22 ausgebildete Streuorgan von der Zapfwelle eines nicht näher dargestellten Zugfahrzeuges angetrieben wird. Hierbei ist dann die Gelenkwelle 20 zum einen mit der Eingangswelle 23 des mit dem Zapfwellenstrang 21 verbundenen Vorgelegegetriebes 24 und zum anderen mit einer der Eingangswellen 16, 17, 18 oder 19 des Antriebsgetriebes 13 verbunden.

Soll nun der Antrieb für das Förderorgan 5 von Zapfwellenantrieb auf Bodenradantrieb umgestellt werden, wird die Gelenkwelle 20 von der Eingangswelle 23 des Vorgelegegetriebes 24 sowie von der jeweiligen Eingangswelle des Antriebsgetriebes 13 entfernt und aus der Durchbruchöffnung 25 des Fahrzeugrahmens 2 herausgezogen. Anschließend wird das Antriebsgetriebe 13 in die mit strichpunktierten Linien dargestellte Position verschwenkt und befestigt. Dann wird die Gelenkwelle 20 mit der der gewünschten Fördergeschwindigkeit des Förderbandes 5 entsprechenden Eingangswelle 16, 17, 18 oder 19 des Antriebsgetriebes 13 sowie mit der Eingangswelle 26 des Winkelgetriebes 27 vom als Reibrad 28 ausgebildeten Bodenantrieb verbunden. Das Reibrad 28 ist gegenüber dem Fahrzeugrahmen schwenkbar an dem Haltearm 29 angelenkt. Dieser Schwenkarm 29 wiederum läßt sich mittels eines nicht näher dargestellten Hydraulikzylinders von der mit durchgezogenen Linien dargestellten Position, der Außerbetriebsstellung, in die mit strichpunktierten Linien wiedergegebene Position, der Betriebsstellung, verschwenken, so daß das Laufrad 4 das Reibrad 28 und somit das Förderband 5 mit der jeweils gewünschten und durch entsprechende Wahl der Eingangswellen 16, 17, 18 oder 19 des Antriebsgetriebes 13 entsprechenden Fördergeschwindigkeit antreibt.

Je nach Wahl der entsprechenden Eingangswelle 16, 17, 18 oder 19 lassen sich neben den unterschiedlichen Fördergeschwindigkeiten auch die unterschiedlichen Förderrichtungen 11 bzw. 12 des Förderbandes 5 einstellen.

Wird das Förderband 5 in Förderrichtung 11 angetrieben, fördert es die sich im Vorratsbehälter 1 befindlichen Materialen über die Auslauföffnung 8 dem im hinteren unteren Bereich sich befindlichen Scheibenstreuwerk zu. Dieses Scheibenstreuwerk 22 wird ebenfalls von dem Zapfwellenstrang 21 angetrieben, wobei sich die Arbeitsbreite des Streuwerkes 22 z.B. durch andersartig ausgebildete Schleuderscheiben, durch winkelverschwenkbare Wurfschaufeln oder durch Verändern der Schleuderscheibenantriebsdrehzahl ein- und verstellen läßt.

Wird das Förderband 5 in Förderrichtung 12 angetrieben, gelangt das sich im Vorratsbehälter befindliche Material über die vordere Austrittsöffnung 10 zu dem als Schneckenstreuwerk 30 ausgebildeten Streuorgan. Die Ausleger 31 befinden sich in Transportstellung nach hinten oben ragend seitlich neben dem Vorratsbehälter 1. Der Antrieb 32 des Schneckenstreuwerkes 30 erfolgt über das Schneckengetriebe 33 von dem Zapfwellenstrang 21.

## Patentansprüche

1. Verteilmaschine mit einem Vorratsbehälter, in dessen unterem Bereich sich zumindest ein angetriebenes Förder- und/oder Dosierorgan befindet, welches die sich im Vorratsbehälter befindlichen Materialien, wie beispielsweise Dünger etc., zu einem ebenfalls angetriebenen Verteilorgan fördert und mit einem verstellbaren Verstellorgan zum Einstellen der Ausbringmenge zusammenwirkt, wobei der Antrieb für das Förder- und/oder Dosierorgan wahlweise über einen Zapfwellenantrieb oder über einen Bodenantrieb erfolgt, dadurch gekennzeichnet, daß der Antrieb für das Förder- und/oder Dosierorgan (5) über eine als Antriebsgetriebe (13) mit mehreren Untersetzungsstufen ausgebildete Antriebsverbindung erfolgt, daß das Antriebsgetriebe (13) schwenkbar am Rahmen (2) der Verteilmaschine angeordnet ist, daß der Antrieb für das Förder- und/oder Dosierorgan (5) über das schwenkbar am Rahmen der Verteilmaschine angeordnete Antriebsgetriebe (13) erfolgt, daß das Antriebsgetriebe (13) in unterschiedlichen Positionen gegenüber dem Rahmen (2) befestigbar ist, und daß das Antriebsgetriebe (13) für das Förder- und/oder Dosierorgan (5) mittels einer Gelenkwelle (20) wahlweise mit dem Bodenantrieb (28) oder mit dem als Zapfwellenantrieb ausgebildeten, die Verteilorgane (22) antreibenden Zapfwellenstrang (21) verbindbar ist.

2. Verteilmaschine nach Anspruch 1, dadurch gekennzeichnet, daß das Antriebsgetriebe (13) mehrere Eingangswellen (16,17,18,19) aufweist, daß die Eingangswellen (16,17,18,19) als Gelenkwellenanschlüsse ausgebildet sind.

3. Verteilmaschine nach einem oder mehreren der vorstehenden Ansprüche, dadurch gekennzeichnet, daß das Antriebsgetriebe (3) als Schaltgetriebe ausgebildet ist.

4. Verteilmaschine nach einem oder mehreren der vorstehenden Ansprüche, dadurch gekennzeichnet, daß der Bodenantrieb als Reibradantrieb (28) ausgebildet ist.

5. Verteilmaschine nach einem oder mehreren der vorstehenden Ansprüche, dadurch gekennzeichnet, daß der Bodenantrieb als ein auf dem Boden abrollendes Laufrad ausgebildet ist.

6. Verteilmaschine nach einem oder mehreren der vorstehenden Ansprüche, dadurch gekennzeichnet, daß das Förder- und/oder Dosierorgan (5) als Förderband ausgebildet ist.

7. Verteilmaschine nach einem oder mehreren der vorstehenden Ansprüche, dadurch gekennzeichnet, daß das Förder- und/oder Dosierorgan (5) als Förderschnecke ausgebildet ist.

8. Verteilmaschine nach einem oder mehreren der vorstehenden Ansprüche, dadurch gekennzeichnet, daß ein oder mehrere Förder- und/oder Dosierorgan(e) (5) im unteren Bereich des Vorratsbehälters (1) angeordnet sind, daß die Verteilmaschine ein oder mehrere Verteilorgan(e) (22) aufweist.

## Claims

1. Distributor, including a hopper, at least one driven conveying and/or metering means being situated in the lower region of the hopper, which means conveys the materials situated in the hopper, such as fertilisers, etc., for example, to a likewise driven distributing means and co-operates with an adjustable adjustment means for setting the distribution quantity, the conveying and/or metering means being selectively driven via a power take-off drive or via a base drive, characterised in that the conveying and/or metering means (5) is driven via a drive connection, which is in the form of drive transmission (13) having a plurality of speed-reduction stages, in that the drive transmission (13) is pivotably disposed on the frame (2) of the distributor, in that the conveying and/or metering means (5) is driven via the drive transmission (13), which is pivotably disposed on the frame of the distributor, in that the drive transmission (13) is securable in variable positions relative to the frame (2), and in that the drive transmission (13) for the conveying and/or metering means (5) is selectively connectable, by means of a universal-jointed shaft (20), to the base drive (28) or to the power take-off shaft train (21), which is in the form of a power take-off drive and drives the distributing means (22).

2. Distributor according to claim 1, characterised in that the drive transmission (13) includes a plurality of primary shafts (16, 17, 18, 19), and in that the primary shafts (16, 17, 18, 19) are universal-jointed shaft connections.

3. Distributor according to one or more of the preceding claims, characterised in that the drive transmission (13) is a change-over transmission.

4. Distributor according to one or more of the preceding claims, characterised in that the base drive is a friction wheel drive (28).

5. Distributor according to one or more of the preceding claims, characterised in that the base drive is a running wheel which rolls on the ground.

6. Distributor according to one or more of the preceding claims, characterised in that the conveying and/or metering means (5) is a conveyor belt.

7. Distributor according to one or more of the preceding claims, characterised in that the conveying and/or metering means (5) is a screw conveyor.

8. Distributor according to one or more of the preceding claims, characterised in that one or more conveying and/or metering means (5) is or are disposed in the lower region of the hopper (1), and in that the distributor has one or more distributing means (22).

## Revendications

1. Epandeur comprenant un réservoir dont la partie inférieure est munie d'au moins un organe de transport entraîné et/ou d'un organe de dosage pour transférer les produits du réservoir, comme par exemple de l'engrais, etc..., vers un organe d'épandage également entraîné et de coopérer avec un organe de réglage, modifiable, pour régler la quantité à distribuer, l'entraînement de l'organe de transport et/ou de dosage se faisant au choix, soit par l'entraînement à prise de force, soit par un entraînement à partir du sol, épandeur caractérisé en ce que l'entraînement de l'organe de transport et/ou de dosage (5) se fait par une liaison d'entraînement réalisée sous la forme d'une transmission d'entraînement (13) à plusieurs rapports de démultiplication, la transmission d'entraînement (13) étant montée basculante sur le châssis (2) de l'épandeur et l'entraînement de l'organe de transport et/ou organe de dosage (5) se faisant par la transmission d'entraînement (13) montée basculante sur le châssis de l'épandeur, la transmission d'entraînement (13) pouvant se fixer dans différentes positions par rapport au châssis (2) et en ce que la transmission d'entraînement (13) de l'organe de transport et/ou de dosage (5) pouvant être reliée par un arbre à cardan (20), au choix, à l'entraînement par le sol 28 ou à la ligne de transmission à prise de force (21) reliée à la prise de force et entraînant les organes d'épandage (22).

2. Epandeur selon la revendication 1, caractérisé en ce que la transmission d'entraînement (13) comporte plusieurs axes d'entrée (16, 17, 18, 19) qui sont réalisés sous forme de raccords pour un arbre à cardan.

3. Epandeur selon une ou plusieurs des revendications précédentes, caractérisé en ce que la transmission d'entraînement (3) est une boîte de vitesse.

4. Epandeur selon une ou plusieurs des revendications précédentes, caractérisé en ce que l'entraînement par le sol est en forme de roue de friction (28).

5. Epandeur selon une ou plusieurs des revendications précédentes, caractérisé en ce que l'entraînement par le sol est une roue qui roule sur le sol.

6. Epandeur selon une ou plusieurs des revendications précédentes, caractérisé en ce que l'organe transporteur et/ou de dosage (5) est une bande transporteuse.

7. Epandeur selon une ou plusieurs des revendications précédentes, caractérisé en ce que l'organe transporteur et/ou de dosage (5) est une vis transporteuse.

8. Epandeur selon une ou plusieurs des revendications précédentes, caractérisé par un ou plusieurs organes de transport et/ou organe de dosage (5) prévus dans la zone inférieure du réservoir (1) et l'épandeur comporte un ou plusieurs organes d'épandage (22).
